# EUROPEAN PATENT SPECIFICATION

(11) **EP 0 989 660 B1**
(45) Date of publication and mention of the grant of the patent: **30.07.2008**
(21) Application number: 99307558.9
(22) Date of filing: 24.09.1999
(51) Int. Cl.: H02M 3/335

(54) **Double ended converter**
Doppelendiger Stromwandler
Convertisseur à double sortie

(30) Priority: 25.09.1998 US 101877 P
(43) Date of publication of application: 29.03.2000
(73) Proprietor: INTERNATIONAL RECTIFIER CORPORATION, El Segundo, CA 90245 (US)
(72) Inventor: Abdoulin, Edgar, Woodland Hills California 91367 (US)
(74) Representative: Robson, Aidan John

(56) References cited:
- US-A- 5 528 480
- RUIZ-MERINO F J ET AL: "POWER INTEGRATED CIRCUITS FOR TELECOM DC/DC CONVERTERS" PROCEEDINGS OF THE INTERNATIONAL TELECOMMUNICATIONS CONFERENCE (INTELEC),US,NEW YORK, IEEE, vol. CONF. 17, 1995, pages 99-106, XP000729649 ISBN: 0-7803-2751-9
- "MULTIPLE OUTPUT LOW NOISE DUAL SYNCHRONOUS CONTROLLER SIMPLIFIES PORTABLE POWER SUPPLIES" ELECTRONIC ENGINEERING,GB,MORGAN-GRAMPIAN LTD. LONDON, vol. 68, no. 835, 1 July 1996 (1996-07-01), page I XP000627448 ISSN: 0013-4902

## Description

### BACKGROUND OF THE INVENTION

### 1. Field of Invention

The present invention relates to switching power converter circuits employing secondary side regulation and, more particularly, to double ended switching power converters employing secondary side regulation circuitry to produce dual and/or interleaved outputs.

### 2. Related Art

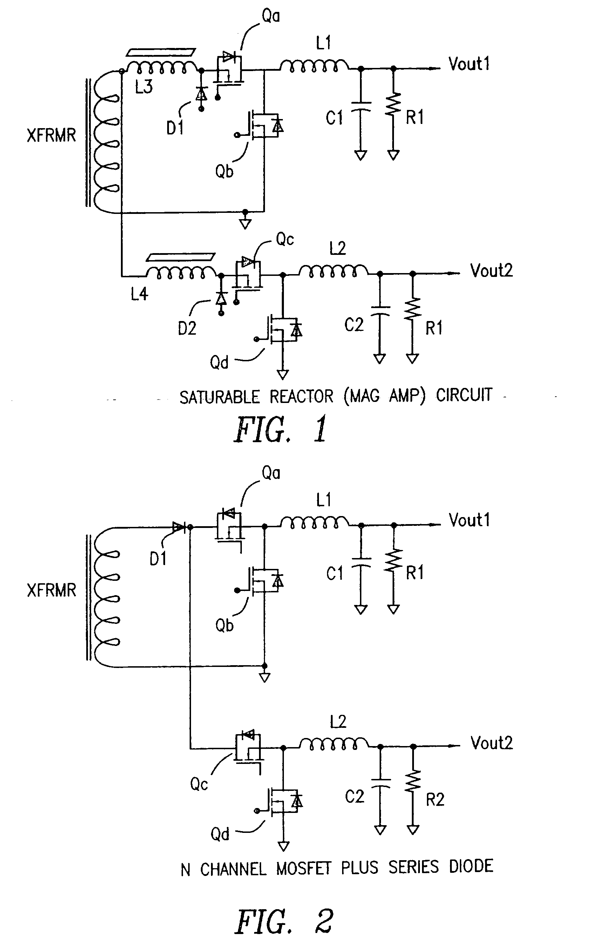

Figs. 1-4 are schematic diagrams showing power converter circuits employing secondary side regulation to produce two output voltages Vout1 and Vout2.

Fig. 1 employs a saturable reactor (mag amp) circuit including a transformer XFRMR (only the secondary winding being shown) coupled to two output regulation circuits. Each regulation circuit includes a series coupled saturable inductor L3, L4 connected from one end of the XRFMR to a shunt diode D1, D2, respectively. First transistors Qa, Qc are coupled in series with the saturable inductors L3, L4, respectively, with their drains terminating at nodes from which second transistors Qb, Qd are respectively connected in a shunt relationship to ground. Output filter inductors L1, L2 are coupled from the common nodes of Qa, Qb, and Qc, Qd, respectively, to filter capacitors C1 and C2. The regulated output voltages Vout1 and Vout2 are taken across filter capacitors C1 and C2, respectively.

A control circuit suitable for controlling diodes D1, D2 and transistors Qa, Qb, Qc, and Qd may be selected from any of the known circuits as would be readily apparent to one skilled in the art.

Fig. 2 shows a schematic diagram for another switching power converter circuit employing secondary side regulation. While the output filter configuration of the circuit shown in Fig. 2 is the same as that shown in Fig. 1, the arrangement of the regulation circuit elements differs. In particular, a single series diode D1 is employed instead of saturable inductors L3, L4 and shunt diodes D1 and D2. Further, transistors Qa and Qc are both coupled in series with diode D1 where the drains of transistors Qa and Qc are coupled together. The sources of transistors Qa and Qc are coupled to shunt transistors Qb and Qd, respectively. The regulated output voltages Vout1 and Vout2 are taken across output filter capacitors C1 and C2, respectively.

A control circuit suitable for providing control signals to transistors Qa, Qb, Qc and Qd may be selected from any of the known circuits as would be apparent to one skilled in the art in view of the above disclosure.

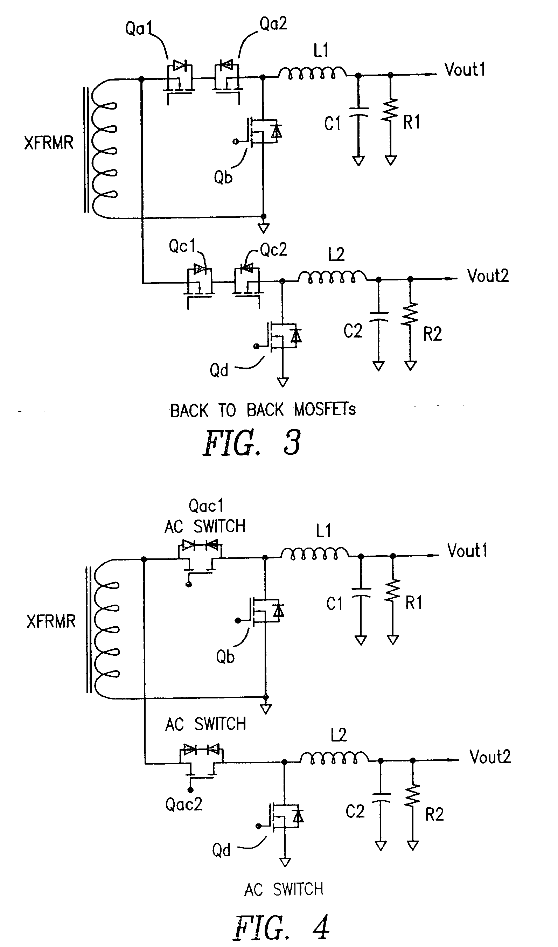

Fig. 3 shows a schematic diagram of yet another switching power converter circuit employing secondary side regulation. In that circuit, back-to-back transistors Qa1 and Qa2 are coupled in series between the XFRMR and the output filter inductor L1. Transistor Qb provides a shunt circuit from the back-to-back transistors to ground. Similarly, back-to-back transistors Qc1 and Qc2 are coupled in series between the XFRMR and the output filter inductor L2, with transistor Qd providing a shunt circuit to ground. The regulated output voltages Vout1 and Vout2 are taken across filter capacitors C1 and C2, respectively. A control circuit suitable for providing control signals to transistors Qa1, Qa2, Qb, Qc1, Qc2, and Qd may be selected from any of the known circuits as would be apparent to one skilled in the art having viewed the above disclosure.

Fig. 4 shows a schematic diagram of still another switching power converter circuit employing seondary side regulation. The circuit of Fig. 4 is substantially similar to the circuit of Fig. 3 except that back-to-back transistors Qa1 and Qa2 are replaced with an AC switch Qac1 and back-to-back transistors Qc1 and Qc2 are replaced with AC switch Qac2.

There is, however, a need in the art for a new circuit topology and control method to obtain secondary side regulation which results in improvements in cost and efficiency.

### SUMMARY OF THE INVENTION

The present invention includes a switching power converter, comprising:
a secondary side transformer winding having first and second ends across which an AC voltage is inducible;
a first regulation circuit including: a first switching element having a power terminal coupled to the first end of the secondary side transformer winding and another power terminal coupled to a first intermediate node; a second switching element having a power terminal coupled to the first intermediate node and another power terminal coupled to a common node; and a first inductor coupled from the first intermediate node to a first output node;
a second regulation circuit including: a third switching element having a power terminal coupled to the second end of the secondary side transformer winding and another power terminal coupled to a second intermediate node; a fourth switching element having a power terminal coupled to the second intermediate node and another power terminal coupled to the common node; and a second inductor coupled from the second intermediate node to a second output node; and
a control circuit operable to deliver respective drive signals to respective control terminals of the first, second, third, and fourth switching elements such that the switching elements turn on and off in such a manner that first and second regulated voltages appear between the first and second output nodes and the common node, respectively.

Other objects, features, and advantages will be apparent to those skilled in the art from the disclosure herein.

### BRIEF DESCRIPTION OF THE DRAWINGS

For the purpose of illustrating the invention, there are shown in the drawing forms which are presently preferred, it being understood, however, that the invention is not limited to the precise arrangements and instrumentalities shown.
Fig. 1 is a schematic diagram showing a first switching power converter employing secondary side regulation according to the prior art;
Fig. 2 is a schematic diagram showing a second switching power converter employing secondary side regulation according to the prior art;
Fig. 3 is a schematic diagram showing a third switching power converter employing secondary side regulation according to the prior art;
Fig. 4 is a schematic diagram showing a fourth switching power converter employing secondary side regulation according to the prior art;
Fig. 5 is a schematic diagram showing a switching power converter topology employing secondary side regulation in accordance with the present invention, the converter being in one operating state;
Fig. 6 is a timing diagram illustrating control signals provided by a control circuit to the converter of Fig. 5;
Fig. 7 is a schematic diagram showing the converter of Fig. 5 during a different operating state;
Fig. 8 is a schematic diagram showing the circuit of Fig. 5 during yet another operating state;
Fig. 9 is a schematic diagram showing a switching power converter employing secondary side regulation according to another aspect of the present invention;
Fig. 10 is a timing diagram showing control signals provided by a control converter to the circuit of Fig. 9;
Fig. 11 is a block diagram showing an integrated circuit and pinout configuration for a control circuit suitable for use with the converters of Figs. 4-10;
Fig. 12 is a timing diagram illustrating alternative control signals provided by a control circuit to the converter of Figs. 5, 7, and 8;
Fig. 13 is a circuit diagram illustrating a switching power converter employing secondary side regulation according to another aspect of the present invention, the converter operating in accordance with the control signals illustrated in Fig. 12;
Fig. 14 is a schematic diagram showing a switching power converter employing secondary side regulation according to yet another aspect of the present invention, the converter operating in accordance with the control signals illustrated in Fig. 12;
Fig. 15 is a block diagram of the control circuit of Figs. 13 and 14; and
Fig. 16 is a timing diagram illustrating various signals produced by the control circuit of Fig. 15.

### DETAILED DESCRIPTION OF THE PREFERRED EMBODIMENTS OF THE PRESENT INVENTION

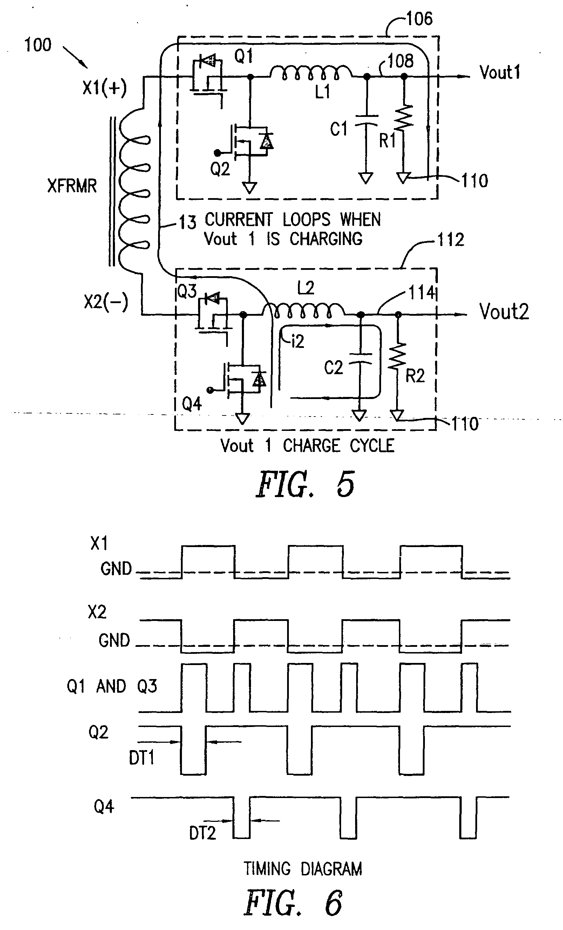

Referring now to the drawings wherein like numerals indicate like elements, there is shown in Fig. 5 a schematic diagram of a switching power conversion circuit 100 in accordance with one aspect of the present invention. Circuit 100 includes a primary side circuit (not shown) having a switching element and a primary side transformer winding coupled to one another to cause alternating current to flow in the primary side transformer winding. The primary side transformer winding is linked to the secondary side transformer winding XFRMR via transformer action such that alternating current (and therefor an AC voltage) appears at secondary side transformer winding XFRMR.

Secondary side transformer winding XFRMR includes a first end X1 and a second end X2. Those skilled in the art will appreciate that an AC voltage is inducible across first end X1 and second end X2 of XFRMR. The first end X1 may be positive with respect to the second end X2 during first partial cycles of the AC voltage. The first end X1 of XFRMR may be negative with respect to the second end X2 during second partial cycles of the AC voltage, where the first and second partial cycles are separated by transitions (see Fig. 6, X1 and X2 waveforms).

A first regulation circuit 106 is coupled to the first end X1 of the XFRMR to produce a regulated output voltage Vout1 between output node 108 and ground (or common potential) 110. A second regulation circuit 112 is coupled to the second end X2 of the XFRMR to produce regulated output voltage Vout2 between output node 114 and ground 110.

First regulation circuit 106 includes transistors Q1, Q2 (e.g., switching elements, preferably N-channel MOSFET transistors), filter inductor L1, filter capacitor C1, and load resistor R1 (optional). Transistor Q1, shown as an N-channel MOSFET, includes a first power terminal (the drain) coupled to the first end X1 of the XFRMR and a second power terminal (the source) coupled to one end of the filter inductor L1. Transistor Q2, also shown as an N-channel MOSFET, includes a first power terminal (the drain) coupled from the source of transistor Q1 and a second power terminal (the source) coupled to ground 110. Capacitor C1 and resistor R1 are coupled in a shunt configuration from node 108 to ground 110.

The second regulation circuit 112 includes transistors Q3 and Q4 (also preferably N-channel MOSFET transistors), filter inductor L2, filter capacitor C2, and load resistor R2 (optional). Transistors Q3 and Q4 are coupled to the second end X2 of the XFRMR in a similar way that Q1 and Q2 were coupled to the first end X1 of the XFRMR. Transistors Q3 and Q4, like transistors Q1 and Q2, are controlled via the control circuit (not shown) such that they commutate in synergy with the alternating voltage and current appearing at XFRMR.

Figs. 5, 7 and 8 illustrate the current paths of i1, i2 and i3 throughout the circuit during different operating states of the converter 100. Fig. 6 is a timing diagram illustrating the control circuit conditions and control signals (or drive signals) provided to Q1, Q2, Q3 and Q4 during these operating states. In particular, Fig. 6 shows the waveforms of the voltages that appear at nodes X1 and X2 during the different periods of operation. As shown, X1 is sometimes positive with respect to X2 (i.e., during the first partial cycles of the AC voltage) and X1 is sometimes negative with respect to X2 (i.e., during the second partial cycles of the AC voltage).

Preferably, the control circuit for Q1, Q2, Q3 and Q4 is operable to bias the transistors on and off in such a way to define at least three operating states, namely: (i) a first state when Q1, Q3, and Q4 are ON and Q2 is OFF; (ii) a second state when Q1 and Q3 are OFF and Q2 and Q4 are ON; and (iii) a third state when Q1, Q3, and Q2 are ON and Q4 is OFF.

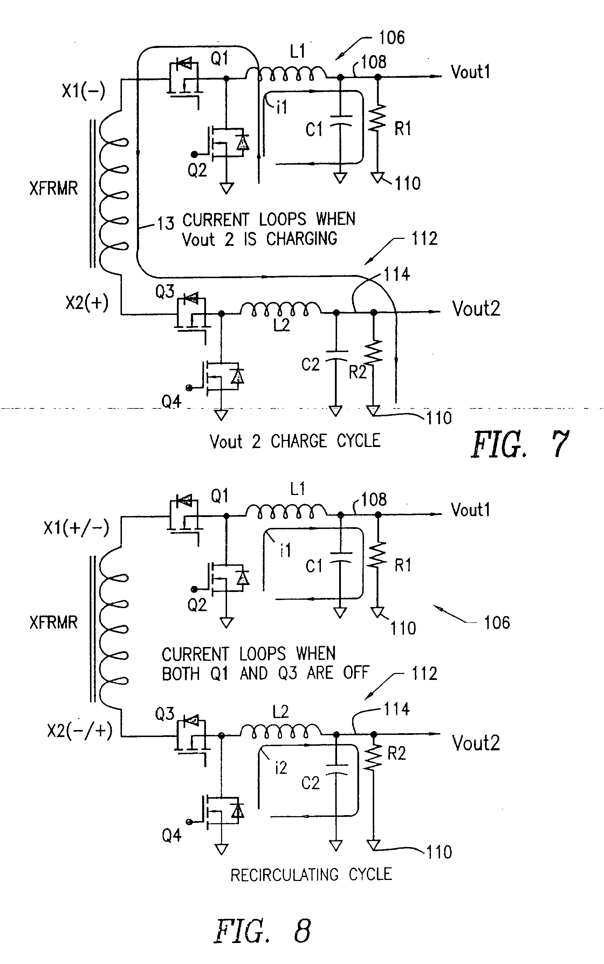

Fig. 5 illustrates current paths during a first partial cycle of the AC voltage, i.e., when X1 is positive with respective to X2, denoted X1(+) and X2(-). There are two operating states during the X1(+), X2(-) partial cycle, the first shown in Fig. 5 and a second shown in Fig. 8. The first operating state exists when Q1, Q3, and Q4 are biased ON and Q2 is biased OFF. The first operating state lasts for a time period identified as DT1 (or delay time 1) in Fig. 6. During this operating state, current i3 flows from ground to Vout1 through transistor Q4, transistor Q3, XFRMR, transistor Q1, and filter inductor L1. Current i3 charges Vout1 through inductor L1 and may then flow through, for example, R1 to ground 110.

A recirculating current i2 flows through inductor L2 during the first operating state. Recirculating current i2 flows from ground 110 to Vout2 through transistor Q4 and filter inductor L2. Current i2 is available to flow through, for example, R2 to ground 110. It is noted that no recirculating current i1 flows in first regulation circuit 106 during this operating state.

With reference to Figs. 6 and 8, the second operating state exists when transistors Q1 and Q3 are biased OFF and transistors Q2 and Q4 are biased ON. During this operating state, recirculating current i1 flows from ground 110 to Vout1 through transistor Q2 and filter inductor L1. Recirculating current i2 also flows during this operating cycle. It is noted that substantially no current i3 flows through XFRMR during the second operating cycle.

With reference to Figs. 6 and 7, current paths are shown during a second partial cycle of the AC voltage, i.e., when X1 is negative with respect to X2, denoted X1(-) and X2(+). There are two operating states during X1(-), X2(+), one of the operating states is the third operating state (shown in Fig. 7) and the other operating state is the second operating state (shown in Fig. 8). The third operating state exists when transistor Q1, Q2 and Q3 are biased ON and transistor Q4 is biased OFF. The third operating state lasts for a time period identified as DT2 (or delay time 2) in Fig. 6. During this operating state, recirculating current i1 flows from ground 110 through transistor Q2 and filter inductor L1. Further, current i3 flows from ground 110 to Vout2 through transistor Q2, transistor Q1, XFRMR, transistor Q3, and filter inductor L2. Current i3 charges Vout2 through inductor L2. It is noted that no recirculating current i2 flows during this operating cycle.

Referring again to Figs. 6 and 8, the second operating state exists when transistors Q1 and Q3 are biased OFF and transistor Q2 and Q4 are biased ON. During this operating state recirculating currents i1 and i2 again flow in the first and second regulation circuits 106, 112, respectively.

The control circuit (not shown) is preferably operable to produce drive signals such that transistors Q1, Q2, Q3, and Q4 are: (i) initially in the first state and transition to the second state during the first partial cycles of the AC voltage (i.e., when X1 is positive with respect to X2); (ii) transition from the second state to the third state substantially coincidently with the transitions from the first to second partial cycles of the AC voltage (i.e., when X1 and X2 switch polarity); and (iii) initially in the third state and transition to the second state during the second partial cycles of the AC voltage (i.e., when X2 is positive with respect to X1).

With reference to Fig. 6, each drive signal for transistors Q1, Q2, Q3 and Q4 includes a plurality of voltage pulses, each voltage pulse being defined by: (i) an ON potential which biases a respective transistor ON; (ii) an OFF potential which biases the respective switching element OFF; (iii) an ON edge located at an OFF to ON potential transition; and (iv) an OFF edge located at an ON to OFF potential transition.

It is noted that the control circuit is operable to produce a drive signal for transistor Q4 which has OFF edges which are substantially coincident with the transitions from the first to second partial cycles of the AC voltage. The control circuit produces drive signals for Q1 and Q3 such that the ON edges of the voltage pulses for those drive signals are substantially coincident with (i) the transitions from the second to first partial cycles of the AC voltage; and (ii) the transitions from the first to second partial cycles of the AC voltage.

The widths of the voltage pulses of the drive signals may be varied to regulate the voltages Vout1 and Vout2. In particular, the ON edges of the drive signals for transistors Q2 and Q4 may be moved relative to the OFF edges (thereby moving relative to the transitions of the AC voltage).

The control circuit is preferably operable to produce drive signals such that (i) the OFF edges of the drive signal for transistor Q2 are substantially coincident with the transitions from the second to first partial cycles of the AC voltage; (ii) the ON edges of the drive signal for transistor Q2 are substantially coincident with some of the OFF edges of the drive signals for transistors Q1 and Q3; and (iii) the ON edges of the drive signal for transistor Q4 are substantially coincident with other OFF edges ofthe drive signals for transistors Q1 and Q3.

The above sequence of drive signals (and operating states) repeats during successive periods of X1 and X2. It is noted that during the first operating state, transistor Q4 carries both recirculating current i2 and charging current i3. Similarly, during the third operating state, transistor Q2 carries both recirculating current i1 and charging i3. Consequently, transistors Q2 and Q4 may have to be sized larger than transistors Q1 and Q3.

It has been found that the circuit configuration shown in Fig. 5 operates best when outputs Vout1 and Vout2 share a common ground 110. Further, it has been found that the efficiency of the switching power converter circuit 100 is maximized when the maximum current outputs from Vout1 and Vout2 are substantially similar. For example, when Vout1 is 5 volts DC at 30 amps, the output current available from Vout2 should be of a similar magnitude, for example, 3.3 volts DC at 25 amps.

Among the advantages of utilizing the circuit shown in Fig. 5, are that four standard transistors (such as N-channel MOSFETs) may be utilized rather than complex back-to-back transistors or AC switches. Further, the circuit may be used at high frequencies and may use AC switches if desired (discussed below). Still further, a single controller circuit (discussed below) may be used while achieving two independently controllable output voltages Vout1 and Vout2. Indeed, first and second regulation circuits 106, 112 may be independently turned ON or OFF.

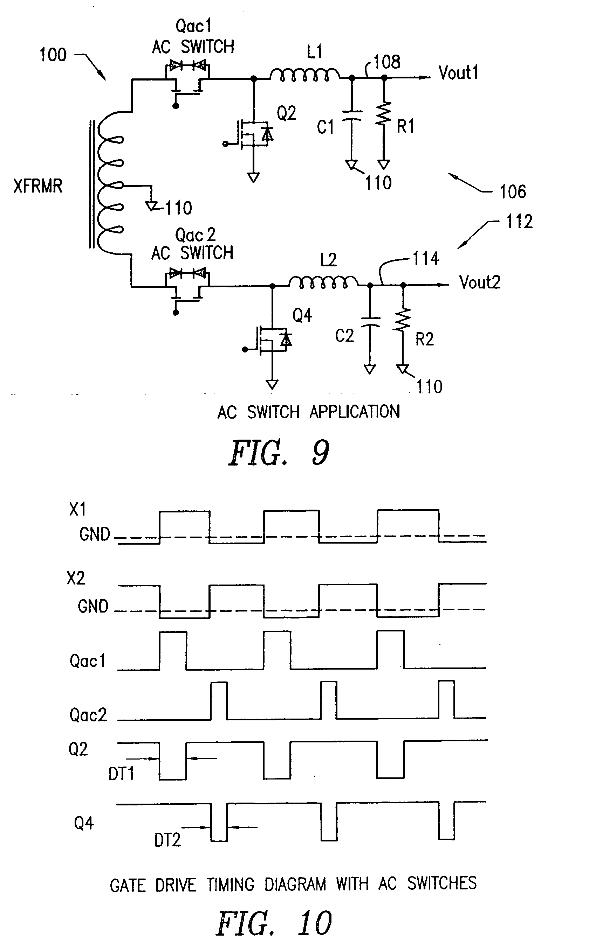

With reference to Figs. 9 and 10, transistors Q1 and Q3 may be replaced with AC switches Qac1 and Qac3, respectively. In this configuration, the secondary side transformer winding XFRMR is center tapped with the center tap coupled to ground 110. Fig. 10 shows a timing diagram illustrating the control sequence for transistors Qac1, Q2, Qac3, and Q4 with respect to the AC voltage across XFRMR.

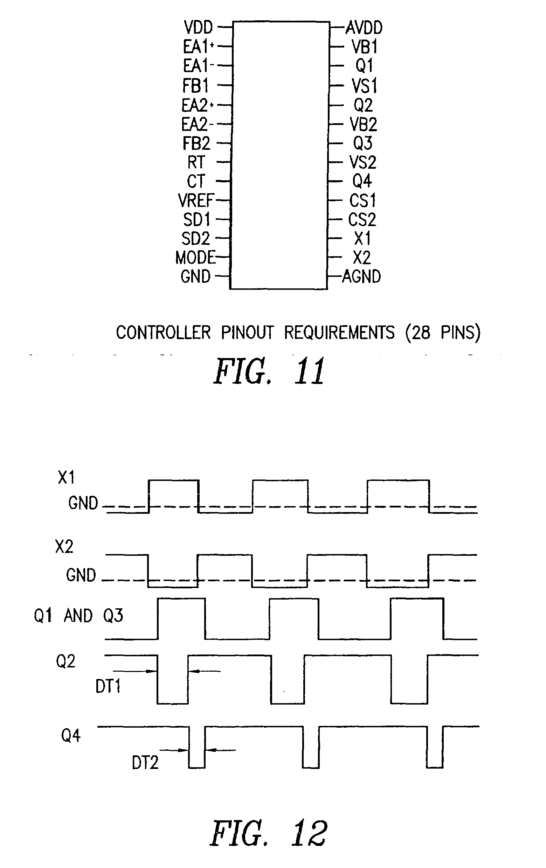

Reference is now made to Fig. 11 which shows an integrated circuit suitable for use as the controller for controlling the converter of Figs. 5 and 9. It is preferred that the controller include 28 pins described in Table 1.

**Table 1**

| Pin | Description |
|---|---|
| AVDD | Analog power (Drivers) |
| VDD | Logic power |
| AGND | Analog ground |
| GND | Logic ground |
| EA1+ | Err amp#1 plus input |
| EA1- | Err amp #1 negative input |
| FB1 | Err amp #1 output |
| EA2+ | Err amp #2 plus input |
| EA2- | Err amp #2 negative input |
| FB2 | Err amp #2 output |
| RT | Timing resistor |
| CT | Timing Capacitor |
| VREF | Internal reference |
| SD1 | PS #1 Shut down |
| SD2 | PS #2 shut down |
| MODE | Mode=0: Nchannel MOSFETS |
| X1 | Transformer High side input |
| X2 | Transformer low side input |
| CS1 | PS #1 Current sense |
| CS2 | PS #2 Current sense |
| VB1, VB2 | High side floating supply bus |
| Q1, Q3 | High side Nchannel gate outputs |
| VS1, VS2 | High side floating supply common |
| Q2, Q4 | Low side gate driver outputs |

Pins EA1+, EA1-, FB1, EA2+, EA2-, and FB2 are provided, among other reasons, to permit frequency compensation and stability adjustments, the design details of which would be apparent to one skilled in the art from the above teaching. Pins RT and CT are provided to adjust the frequency of the controller. Pins SD1 and SD2 are provided to permit asynchronous or synchronous shut-down of the first and/or second regulation circuits 106, 112. Pin MODE is provided such that either N-channel MOSFETs or AC switches may be employed using the same controller. Indeed, when the MODE pin is taken to a logic zero, the controller operates to provide the timing control signals shown in Fig. 6. When the MODE pin is taken to logic 1, the controller provides the control signals shown in Fig. 10.

Loss measurements for the circuits of Figs. 1-5 and 9 were taken under the following conditions:
(I) the XFRMR voltage being 20 volts DC at 50% duty cycle;
(ii) Vout1 being 5 volts DC and Vout2 being 3.3 volts DC;
(iii) current output from Vout1 being 30 amps DC and the current output from Vout2 being 25 amps DC;
(iv) DT1 being 0.25 duty cycle and DT2 being 0.165 duty cycle;
(v) the forward voltage drop of any Shottkey diodes being 0.35 volts DC;
(vi) the ON resistance of any AC switches being 0.009 ohms; and
(vii) the ON resistance of any MOSFET transistors being 0.003 ohms.

The total loss for the power conversion circuits of Figs. 1 and 2 was found to be 7,115 Watts at a normalized "cost" of 4.7. The total loss for the power conversion circuit of Fig. 3 was found to be 3.266 Watts at a normalized "cost" of 6.0. The total loss for the power conversion circuit of Fig. 4 was found to be 3.485 Watts at a normalized "cost" of 4.4. The total loss of the power conversion circuit of Figs. 5 and 9 was found to be 3.889 Watts at a normalized "cost" of 4.0.

Reference is now made to Fig. 12 which illustrates timing signals which are preferably produced by a control circuit (not shown) suitable for providing drive signals to the power converter topology of Figs. 5, 7, and 8 according to another aspect of the present invention. In particular, the control circuit is preferably operable to produce the drive signals such that the transistors Q1, Q2, Q3, and Q4: (i) transition from the second state to the first state during the first partial cycles of the AC voltage (i.e., when X1 is positive with respect to X2); (ii) transition from the first state to the third state substantially coincidently with the transitions from the first to second partial cycles of the AC voltage; (iii) transition from the third state to the second state during the second partial cycles ofthe AC voltage (i.e., when X2 is positive with respect to X1); and (iv) remain in the second state through the transitions from the second to first partial cycles of the AC voltage.

As was the case with the control circuit for Fig. 6, the control circuit for Fig. 12 is preferably operable to produce a drive signal for transistor Q4 having OFF edges which are substantially coincident with the transitions from the first to second partial cycles of the AC voltage. Unlike the control circuit for Fig. 6, the control circuit for Fig. 12 is preferably operable to produce a drive signal for transistor Q2 having ON edges which are substantially coincident with the transitions from the first to second partial cycles of the AC voltage. Thus, the ON edges of the drive signal for Q2 are substantially coincident with the OFF edges of the drive signal for transistor Q4. Furthermore, the OFF edges of the drive signal for Q2 are substantially coincident with the ON edges of the drive signals for transistors Q1 and Q3, while the ON edges of the drive signal for transistor Q4 are substantially coincident with the OFF edges of the drive signals for transistors Q1 and Q3.

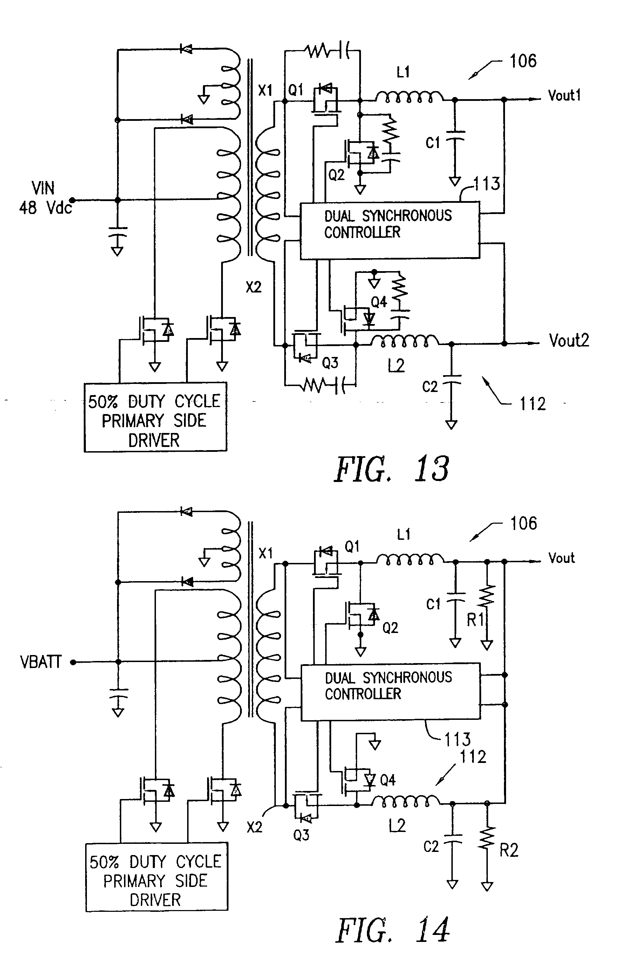

Fig. 13 is a circuit diagram illustrating a power converter employing the topology of Fig. 5 with additional details shown. In particular, a primary side of the converter includes switching elements (e.g., N-channel MOSFET transistors) operating at a 50% duty cycle and driving a center tapped primary side transformer winding, where the center tap is connected to a source ofDC voltage (i.e., VDC). A reset transformer winding is also provided. A control circuit (in particular, a dual synchronous controller) 113 receives input signals from Vout 1, Vout 2, X1, and X2. The control circuit 113 provides drive signals to transistors Q1, Q2, Q3, and Q4 (each transistor including a resistor/capacitor snubber circuit). Preferably, the controller 113 provides drive signals illustrated in Fig. 12.

Fig. 14 illustrates a circuit diagram for a power converter employing an alternative topology of Fig. 13. In particular, the output nodes for Vout1and Vout2 are tied together for an interleaved configuration producing a single output voltage Vout. The operation of this power converter is substantially similar to that of Fig. 13.

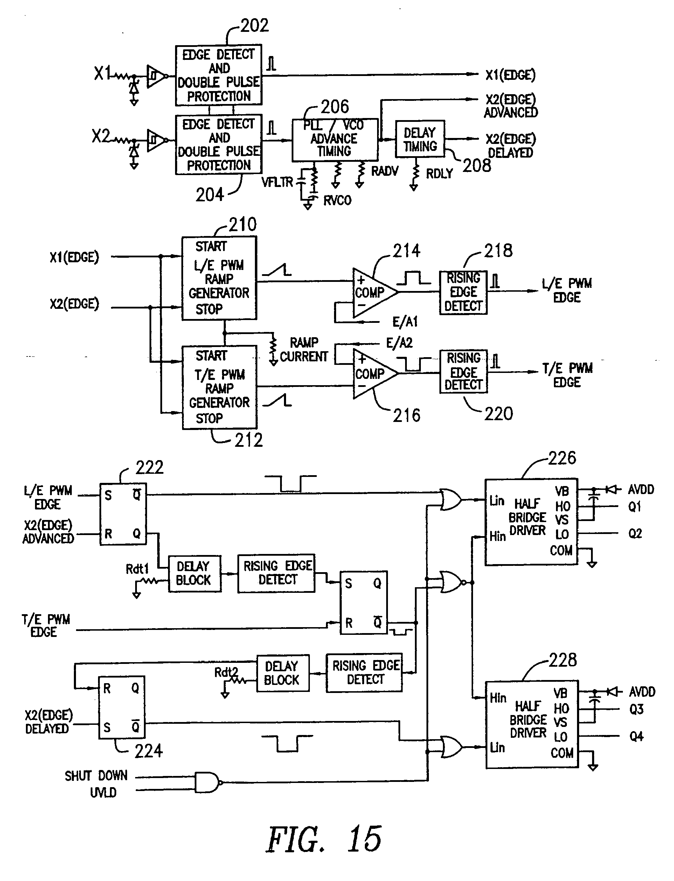

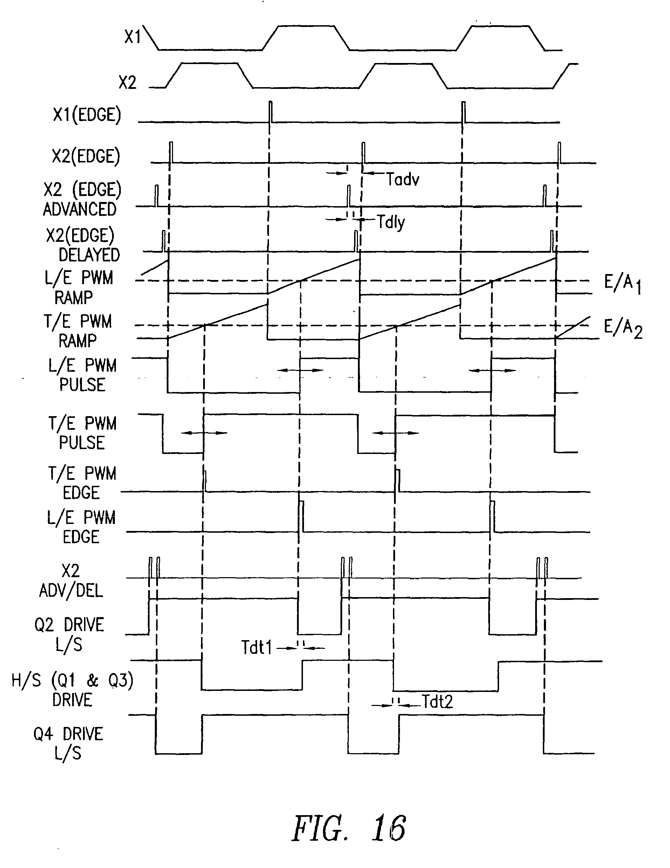

Fig. 15 is a circuit diagram suitable for implementing the control circuit 113 of Figs. 13 and 14. Fig. 16 is a timing diagram illustrating certain signals within the circuit of Fig. 15. With reference to Fig. 15, X1 and X2 are amplitude limited by respective series resistors and shunt zener diodes, and buffered by respective inverting amplifiers prior to their input into edge detect and double pulse protection circuits 202, 204. Edge detect circuits 202, 204 are operable to detect the respective transitions in X1 and X2 (i.e., the transitions from first to second and second to first partial cycles of the AC voltage). Edge detect circuits 202, 204 produce pulses labeled X1 (EDGE) and X2 (EDGE) shown in Fig. 16.

A phase-lock-loop circuit (PLL) 206 receives the X2 (EDGE) signal from the edge detect circuit 204 and produces an X2 (EDGE) ADVANCED signal (see Fig. 16) which leads the X2 (EDGE) signal. A delay timing circuit 208 receives the X2 (EDGE) ADVANCED signal and produces an X2 (EDGE) DELAYED signal which lags the X2 (EDGE) ADVANCED signal but leads the X2 (EDGE) signal (see Fig. 16).

Preferably, the X2 (EDGE) ADVANCED pulse causes the OFF to ON transition of the drive signal for Q2 (Q2 DRIVE), while the X2 (EDGE) DELAYED signal causes the ON to OFF transition of the drive signal for transistor Q4 (Q4 DRIVE). Thus, the ON edge of the Q2 drive signal and the OFF edge of the Q4 drive signal are synchronized with and slightly lead the transitions from the first to second partial cycles of the AC voltage. Advantageously, the ON potentials of the Q2 drive and Q4 drive overlap slightly to compensate for any stray inductance associated with transistors Q2 and Q4 or the printed circuit board. Moreover, since the ON edge of the Q2 drive and the OFF edge of the Q4 drive lead the transitions from first to second partial cycles of the AC voltage, improved efficiency is achieved because current is not commutated in the anti-parallel diodes of switching elements Q2 and Q4. Rather, commutating current flows within the transistor channels.

With reference to Fig. 15, the X1 (EDGE) and X2 (EDGE) signals are input into ramp generating circuits 210 and 212 which produce L/E PWM RAMP and T/E PWM RAMP signals (see also Fig. 16). As is known in the art, error amplifiers (not shown) are used to compare the voltages at Vout1 and Vout2 with reference voltages. These error amplifiers produce error signals E/A1 and E/A2 (shown as dotted lines in Fig. 16). Error amplifier signals E/A1 and E/A2 are input into comparator circuits 214, 216, respectively which compare the error signals with the ramp signals produced by ramp generating circuits 210, 212. The pulsed outputs of comparator circuits 214, 216 produce L/E PWM PULSE and T/E PWM PULSE signals, respectively. As the error signal E/A1 rises and falls with respect to the L/E PWM RAMP signal, the leading edge of the L/E PWM PULSE signal moves with respect to: (i) the falling edge of the L/E PWM RAMP signal; and (ii) the initial point of the rising edge of the T/E PWM RAMP signal. Thus, the L/E PWM PULSE signal is referred to as leading edge PWM control.

As error signal E/A2 rises and falls with respect to the T/E PWM RAMP signal, the trailing edge of the T/E PWM PULSE signal moves with respect to: (i) the falling edge of the L/E PWM RAMP signal; and (ii) the initial point of the rising edge of the T/E PWM RAMP signal. Thus, the T/E PWM PULSE signal is referred to as trailing edge PWM control.

Those skilled in the art will appreciate that the L/E PWM PULSE and T/E PWM PULSE signals are utilized to derive the drive signals for transistors Q1, Q2, Q3 and Q4 using rises edge detect circuits 218, 220; flip flop circuits 222, 224; and half bridge driver circuits 226, 228. Advantageously, the leading edge PWM and trailing edge PWM control of transistors Q2 and Q4 permit transistors Q1 and Q3 to remain ON (i.e., in the third operating state) during the transitions from the first to second partial cycles of the AC voltage (see also Fig. 12), thereby resulting in lower switch loses and gate drive energy requirements for transistors Q1 and Q3.

The foregoing description of the preferred embodiments of the invention has been provided for the purposes of illustration and description. It is not intended to be exhaustive or to limit the invention to the precise forms disclosed. Many modifications and variations are possible in light of the above teaching. It is intended that the scope of the invention be limited not by this detailed description, but rather by the claims appended hereto.

## Claims

1. A switching power converter, comprising:
a secondary side transformer winding having first and second ends across which an AC voltage is inducible;
a first regulation circuit including: a first switching element having a power terminal coupled to the first end of the secondary side transformer winding and another power terminal coupled to a first intermediate node; a second switching element having a power terminal coupled to the first intermediate node and another power terminal coupled to a common node; and a first inductor coupled from the first intermediate node to a first output node;
a second regulation circuit including: a third switching element having a power terminal coupled to the second end of the secondary side transformer winding and another power terminal coupled to a second intermediate node; a fourth switching element having a power terminal coupled to the second intermediate node and another power terminal coupled to the common node; and a second inductor coupled from the second intermediate node to a second output node; and
a control circuit operable to deliver respective drive signals to respective control terminals of the first, second, third, and fourth switching elements such that the switching elements turn on and off in such a manner that first and second regulated voltages appear between the first and second output nodes and the common node, respectively.

2. The switching power converter of claim 1, wherein:
the control circuit is operable to produce the drive signals such that the switching elements define at least three states, a first state being when the first, third and fourth switching elements are on and the second switching element is off, a second state being when the first and third switching elements are off and the second and fourth switching elements are on, and a third state being when the first, third and second switching elements are on and the fourth switching element is off; and
the control circuit is operable to produce the drive signals such that: (i) the switching elements are capable of being in the first state when the first end of the secondary side transformer winding is positive with respect to the second end thereof; (ii) the switching elements are capable of being in the third state when the first end of the secondary side transformer winding is negative with respect to the second end thereof; and (iii) the switching elements are capable of being in the second state irrespective of the potential between the first and second ends of the secondary side transformer winding.

3. The switching power converter of claim 2, wherein the control circuit is operable to produce the drive signals such that:
current in the first inductor charges and current in the second inductor re-circulates when: (i) the first end of the secondary side transformer winding is positive with respect to the second end thereof; and (ii) the switching elements are in the first state;
currents in the first and second inductors re-circulate when the switching elements are in the second state; and
current in the first inductor re-circulates and current in the second inductor charges when: (i) the first end of the secondary side transformer winding is positive with respect to the second end thereof; and (ii) the switching elements are in the third state.

4. The switching power converter of claim 2, wherein:
the first end of the secondary side transformer winding is positive with respect to the second end thereof during first partial cycles of the AC voltage and the first end of the secondary side transformer winding is negative with respect to the second end thereof during second partial cycles of the AC voltage, the first and second partial cycles being separated by transitions; and
the control circuit is operable to produce the drive signals such that: (i) the switching elements are initially in the first state and transition to the second state during the first partial cycles of the AC voltage; (ii) the switching elements transition from the second state to the third state substantially coincidently with the transitions from the first to second partial cycles of the AC voltage; and (iii) the switching elements are initially in the third state and transition to the second state during the second partial cycles of the AC voltage.

5. The switching power converter of claim 4, wherein:
the drive signals comprise first, second, third and fourth drive signals operable to bias the first, second, third, and fourth switching elements, respectively, on and off, each of the drive signals including a plurality of voltage pulses, each voltage pulse being defined by: (I) an ON potential which biases a respective switching element on, (ii) an OFF potential which biases the respective switching element off, (iii) an ON edge located at an OFF to ON potential transition, and (iv) an OFF edge located at an ON to OFF potential transition;
the OFF edges of the voltage pulses of the fourth drive signal are substantially coincident with the transitions from the first to second partial cycles of the AC voltage;
the ON edges of the voltage pulses of the first and third drive signals are substantially coincident with (I) the transitions from the second to first partial cycles of the AC voltage; and (ii) the transitions from the first to second partial cycles of the AC voltage;
the OFF edges of the voltage pulses of the second drive signal are substantially coincident with the transitions from the second to first partial cycles of the AC voltage;
the ON edges of the voltage pulses of the second drive signal are substantially coincident with a first subset of the OFF edges of the voltage pulses of the first and third drive signals; and
the ON edges of the voltage pulses of the fourth drive signal are substantially coincident with a second subset of the OFF edges of the voltage pulses of the first and third drive signals.

6. The switching power converter of claim 5, wherein the control circuit is operable to produce the drive signals such that:
the switching elements transition from the second state to the first state during the first partial cycles of the AC voltage;
the switching elements transition from the first state to the third state substantially coincidently with the transitions from the first to second partial cycles of the AC voltage;
the switching elements transition from the third state to the second state during the second partial cycles of the AC voltage; and
the switching elements remain in the second state through the transitions from the second to first partial cycles of the AC voltage.

7. The switching power converter of claim 6, wherein:
the drive signals comprise first, second, third and fourth drive signals operable to bias the first, second, third, and fourth switching elements, respectively, on and off, each of the drive signals including a plurality of voltage pulses, each voltage pulse being defined by: (I) an ON potential which biases a respective switching element on, (ii) an OFF potential which biases the respective switching element off, (iii) an ON edge located at an OFF to ON potential transition, and (iv) an OFF edge located at an ON to OFF potential transition;
the OFF edges of the voltage pulses of the fourth drive signal are substantially coincident with the transitions from the first to second partial cycles of the AC voltage;
the ON edges of the voltage pulses of the second drive signal are substantially coincident with the transitions from the first to second partial cycles of the AC voltage;
the OFF edges of the voltage pulses of the second drive signal are substantially coincident with the ON edges of the voltage pulses of the first and third drive signals; and
the ON edges of the voltage pulses of the fourth drive signal are substantially coincident with the OFF edges of the voltage pulses of the first and third drive signals.

8. The switching power converter of claim 7, wherein the control circuit is operable to vary respective widths between OFF and ON edges of the respective voltage pulses to control the first and second regulated voltages.

9. The switching power converter of claim 1, wherein the first, second, third, and fourth switching elements are MOS-gated transistors.

10. The switching power converter of claim 1, wherein the first and third switching elements are MOS-gated AC transistors, the second and fourth switching elements are MOS-gated transistors, and the secondary side transformer winding includes a center tap coupled to the common node.

## Patentansprüche

1. Schaltstromwandler, der Folgendes umfasst:
eine sekundärseitige Transformatorwicklung mit einem ersten und einem zweiten Ende, über die eine Wechselspannung induzierbar ist;
eine erste Regulierschaltung, die Folgendes aufweist: ein erstes Schaltelement mit einem Stromanschluss, der mit dem ersten Ende der sekundärseitigen Transformatorwicklung gekoppelt ist, und einem weiteren Stromanschluss, der mit einem ersten Zwischenknoten gekoppelt ist; ein zweites Schaltelement mit einem Stromanschluss, der mit dem ersten Zwischenknoten gekoppelt ist, und einem weiteren Stromanschluss, der mit einem gemeinsamen Knoten gekoppelt ist; und einen ersten Induktor, der zwischen dem ersten Zwischenknoten und einem ersten Ausgangsknoten geschaltet ist;
eine zweite Regulierschaltung, die Folgendes aufweist: ein drittes Schaltelement mit einem Stromanschluss, der mit dem zweiten Ende der sekundärseitigen Transformatorwicklung gekoppelt ist, und einem weiteren Stromanschluss, der mit einem zweiten Zwischenknoten gekoppelt ist; ein viertes Schaltelement mit einem Stromanschluss, der mit dem zweiten Zwischenknoten gekoppelt ist, und einem weiteren Stromanschluss, der mit dem gemeinsamen Knoten gekoppelt ist; und einen zweiten Induktor, der zwischen dem zweiten Zwischenknoten und einem zweiten Ausgangsknoten geschaltet ist; und
eine Steuerschaltung mit der Aufgabe, jeweilige Ansteuerungssignale zu jeweiligen Steueranschlüssen des ersten, zweiten, dritten und vierten Schaltelementes zuzuführen, so dass die Schaltelemente auf eine solche Weise ein- und ausschalten, dass die erste und die zweite regulierte Spannung jeweils zwischen dem ersten und zweiten Ausgangsknoten und dem gemeinsamen Knoten anliegen.

2. Schaltstromwandler nach Anspruch 1, wobei:
die Steuerschaltung die Aufgabe hat, die Ansteuerungssignale so zu erzeugen, dass die Schaltelemente wenigstens drei Zustände definieren, einen ersten Zustand, der gegeben ist, wenn das erste, das dritte und das vierte Schaltelement ein- und das zweite Schaltelement ausgeschaltet sind, einen zweiten Zustand, der gegeben ist, wenn das erste und das dritte Schaltelement aus- und das zweite und das vierte Schaltelement eingeschaltet sind, und einen dritten Zustand, der gegeben ist, wenn das erste, das dritte und das zweite Schaltelement ein- und das vierte Schaltelement ausgeschaltet sind; und
die Steuerschaltung die Aufgabe hat, die Ansteuerungssignale so zu erzeugen, dass: (i) die Schaltelemente im ersten Zustand sein können, wenn das erste Ende der sekundärseitigen Transformatorwicklung in Bezug auf ihr zweites Ende positiv ist; (ii) die Schaltelemente im dritten Zustand sein können, wenn das erste Ende der sekundärseitigen Transformatorwicklung in Bezug auf ihr zweites Ende negativ ist; und (iii) die Schaltelemente unabhängig von dem Potential zwischen dem ersten und dem zweiten Ende der sekundärseitigen Transformatorwicklung im zweiten Zustand sein können.

3. Schaltstromwandler nach Anspruch 2, wobei die Steuerschaltung die Aufgabe hat, die Ansteuerungssignale zu erzeugen, so dass:
Strom im ersten Induktor lädt und Strom im zweiten Induktor umläuft, wenn: (i) das erste Ende der sekundärseitigen Transformatorwicklung in Bezug auf ihr zweites Ende positiv ist; und (ii) die Schaltelemente im ersten Zustand sind;
Ströme im ersten und im zweiten Induktor umlaufen, wenn die Schaltelemente im zweiten Zustand sind; und
Strom im ersten Induktor umläuft und Strom im zweiten Induktor lädt, wenn: (i) das erste Ende der sekundärseitigen Transformatorwicklung in Bezug auf ihr zweites Ende positiv ist; und (ii) die Schaltelemente im dritten Zustand sind.

4. Schaltstromwandler nach Anspruch 2, wobei:
das erste Ende der sekundärseitigen Transformatorwicklung in Bezug auf ihr zweites Ende während der ersten Teilzyklen der Wechselspannung positiv ist und das erste Ende der sekundärseitigen Transformatorwicklung in Bezug auf ihr zweites Ende während der zweiten Teilzyklen der Wechselspannung negativ ist, wobei die ersten und zweiten Teilzyklen durch Übergänge getrennt sind; und
die Steuerschaltung die Aufgabe hat, die Ansteuerungssignale zu erzeugen, so dass: (i) die Schaltelemente zunächst im ersten Zustand sind und während der ersten Teilzyklen der Wechselspannung in den zweiten Zustand übergehen; (ii) die Schaltelemente vom zweiten Zustand in den dritten Zustand im Wesentlichen übereinstimmend mit den Übergängen vom ersten in den zweiten Teilzyklus der Wechselspannung übergehen; und (iii) die Schaltelemente zunächst im dritten Zustand sind und während der zweiten Teilzyklen der Wechselspannung in den zweiten Zustand übergehen.

5. Schaltstromwandler nach Anspruch 4, wobei:
die Ansteuerungssignale erste, zweite, dritte und vierte Ansteuerungssignale umfassen, die die Aufgabe haben, das erste, zweite, dritte und vierte Schaltelement jeweils ein und aus vorzuspannen, wobei jedes der Ansteuerungssignale mehrere Spannungsimpulse aufweist, wobei jeder Spannungsimpuls definiert wird durch: (i) ein Einschaltpotential, das ein jeweiliges Schaltelement in den Einschaltzustand vorspannt; (ii) ein Ausschaltpotential, das das jeweilige Schaltelement in den Ausschaltzustand vorspannt, (iii) eine Einschaltflanke am Übergang vom Ausschalt- auf das Einschaltpotential, und (iv) eine Ausschaltflanke am Übergang vom Einschalt- auf das Ausschaltpotential;
die Ausschaltflanken der Spannungsimpulse des vierten Ansteuerungssignals im Wesentlichen mit den Übergängen von den ersten zu den zweiten Teilzyklen der Wechselspannung zusammenfallen;
die Einschaltflanken der Spannungsimpulse des ersten und des dritten Ansteuerungssignals im Wesentlichen mit (i) den Übergängen von den ersten zu den zweiten Teilzyklen der Wechselspannung und (ii) den Übergängen von den ersten zu den zweiten Teilzyklen der Wechselspannung zusammenfallen;
die Ausschaltflanken der Spannungsimpulse des zweiten Ansteuerungssignals im Wesentlichen mit den Übergängen von den zweiten zu den ersten Teilzyklen der Wechselspannung zusammenfallen;
die Einschaltflanken der Spannungsimpulse des zweiten Ansteuerungssignals im Wesentlichen mit einer ersten Teilmenge der Ausschaltflanken der Spannungsimpulse des ersten und dritten Ansteuerungssignals zusammenfallen; und
die Einschaltflanken der Spannungsimpulse des vierten Ansteuerungssignals im Wesentlichen mit einer zweiten Teilmenge der Ausschaltflanken der Spannungsimpulse des ersten und des dritten Ansteuerungssignals zusammenfallen.

6. Schaltstromwandler nach Anspruch 5, wobei die Steuerschaltung die Aufgabe hat, die Ansteuerungssignale zu erzeugen, so dass:
die Schaltelemente während der ersten Teilzyklen der Wechselspannung vom zweiten Zustand in den ersten Zustand übergehen;
die Schaltelemente vom ersten Zustand in den dritten Zustand im Wesentlichen mit den Übergängen von den ersten zu den zweiten Teilzyklen der Wechselspannung zusammenfallen;
die Schaltelemente während der zweiten Teilzyklen der Wechselspannung vom dritten Zustand in den zweiten Zustand übergehen; und
die Schaltelemente während der Übergänge von den zweiten in die ersten Teilzyklen der Wechselspannung im zweiten Zustand bleiben.

7. Schaltstromwandler nach Anspruch 6, wobei:
die Ansteuerungssignale erste, zweite, dritte und vierte Ansteuerungssignale umfassen, die die Aufgabe haben, das erste, zweite, dritte und vierte Schaltelement jeweils ein- und auszuschalten, wobei jedes der Ansteuerungssignale mehrere Spannungsimpulse aufweist, wobei jeder Spannungsimpuls definiert wird durch: (i) ein Einschaltpotential, das ein jeweiliges Schaltelement in den Einschaltzustand vorspannt, (ii) ein Ausschaltpotential, das das jeweilige Schaltelement in den Ausschaltzustand vorspannt, (iii) eine Einschaltflanke am Übergang vom Ausschalt- ins Einschaltpotential, und (iv) eine Ausschaltflanke am Übergang vom Einschalt- ins Auschaltpotential;
die Ausschaltflanken der Spannungsimpulse des vierten Ansteuerungssignals im Wesentlichen mit den Übergängen von den ersten zu den zweiten Teilzyklen der Wechselspannung zusammenfallen;
die Einschaltflanken der Spannungsimpulse des zweiten Ansteuerungssignals im Wesentlichen mit den Übergängen von den ersten zu die zweiten Teilzyklen der Wechselspannung zusammenfallen;
die Ausschaltflanken der Spannungsimpulse des zweiten Ansteuerungssignals im Wesentlichen mit den Einschaltflanken der Spannungsimpulse des ersten und des dritten Ansteuerungssignals zusammenfallen; und
die Einschaltflanken der Spannungsimpulse des vierten Ansteuerungssignals im Wesentlichen mit den Ausschaltflanken der Spannungsimpulse des ersten und des dritten Ansteuerungssignals zusammenfallen.

8. Schaltstromwandler nach Anspruch 7, wobei die Steuerschaltung die Aufgabe hat, jeweilige Breiten zwischen Ein- und Ausschaltflanken der jeweiligen Spannungsimpulse zum Regeln der ersten und zweiten geregelten Spannungen zu variieren.

9. Schaltstromwandler nach Anspruch 1, wobei das erste, zweite, dritte und vierte Schaltelement MOS-gattergesteuerte Transistoren sind.

10. Schaltstromwandler nach Anspruch 1, wobei das erste und das dritte Schaltelement MOS-gattergesteuerte Wechselstromtransistoren, das zweite und das vierte Schaltelement MOS-gattergesteuerte Transistoren sind und die sekundärseitige Transformatorwicklung einen mittleren Abgriff aufweist, der mit dem gemeinsamen Knoten gekoppelt ist.

## Revendications

1. Convertisseur de puissance de commutation, comprenant :
un enroulement de transformateur secondaire ayant des première et deuxième extrémités aux bornes desquelles une tension C.A. peut être induite ;
un premier circuit de régulation comportant : un premier élément de commutation ayant une borne de puissance couplée à la première extrémité de l'enroulement de transformateur secondaire et une autre borne de puissance couplée à un premier noeud intermédiaire ; un deuxième élément de commutation ayant une borne de puissance couplée au premier noeud intermédiaire et une autre borne de puissance couplée à un noeud commun ; et une première bobine d'induction couplée entre le premier noeud intermédiaire et un premier noeud de sortie ;
un deuxième circuit de régulation comportant : un troisième élément de commutation ayant une borne de puissance couplée à la deuxième extrémité de l'enroulement de transformateur secondaire et une autre borne de puissance couplée à un deuxième noeud intermédiaire ; un quatrième élément de commutation ayant une borne de puissance couplée au deuxième noeud intermédiaire et une autre borne de puissance couplée au noeud commun ; et une deuxième bobine d'induction couplée entre le deuxième noeud intermédiaire et un deuxième noeud de sortie ; et
un circuit de commande exploitable pour délivrer des signaux de commande respectifs à des bornes de commande respectives des premier, deuxième, troisième et quatrième éléments de commutation de telle sorte que les éléments de commutation soient activés et désactivés de façon à ce que des première et deuxième tensions régulées apparaissent entre les premier et deuxième noeuds de sortie et le noeud commun, respectivement.

2. Convertisseur de puissance de commutation selon la revendication 1, dans lequel :
le circuit de commande est exploitable afin de produire les signaux de commande de telle sorte que les éléments de commutation définissent au moins trois états, un premier état étant quand les premier, troisième et quatrième éléments de commutation sont activés et le deuxième élément de commutation est désactivé, un deuxième état étant quand les premier et troisième éléments de commutation sont désactivés et les deuxième et quatrième éléments de commutation sont activés, et un troisième état étant quand les premier, troisième et deuxième éléments de commutation sont activés et le quatrième élément de commutation est désactivé ; et
le circuit de commande est exploitable afin de produire les signaux de commande de telle sorte que : (i) les éléments de commutation puissent être dans le premier état quand la première extrémité de l'enroulement de transformateur secondaire est positive par rapport à la deuxième extrémité de celui-ci ; (ii) les éléments de commutation puissent être dans le troisième état quand la première extrémité de l'enroulement de transformateur secondaire est négative par rapport à la deuxième extrémité de celui-ci ; et (iii) les éléments de commutation puissent être dans le deuxième état quel que soit le potentiel entre les première et deuxième extrémités de l'enroulement de transformateur secondaire.

3. Convertisseur de puissance de commutation selon la revendication 2, dans lequel le circuit de commande est exploitable afin de produire les signaux de commande de telle sorte que :
un courant dans la première bobine d'induction se charge et un courant dans la deuxième bobine d'induction soit recyclé quand : (i) la première extrémité de l'enroulement de transformateur secondaire est positive par rapport à la deuxième extrémité de celui-ci, et (ii) les éléments de commutation sont dans le premier état ;
les courants dans les première et deuxième bobines d'induction soient recyclés quand les éléments de commutation sont dans le deuxième état ; et
le courant dans la première bobine d'induction soit recyclé et le courant dans la deuxième bobine d'induction se charge quand : (i) la première extrémité de l'enroulement de transformateur secondaire est positive par rapport à la deuxième extrémité de celui-ci ; et (ii) les éléments de commutation sont dans le troisième état.

4. Convertisseur de puissance de commutation selon la revendication 2, dans lequel :
la première extrémité de l'enroulement de transformateur secondaire est positive par rapport à la deuxième extrémité de celui-ci durant des premiers cycles partiels de la tension C.A. et la première extrémité de l'enroulement de transformateur secondaire est négative par rapport à la deuxième extrémité de celui-ci durant des deuxièmes cycles partiels de la tension C.A., les premiers et deuxièmes cycles partiels étant séparés par des transitions ; et
le circuit de commande est exploitable pour produire les signaux de commande de telle sorte que : (i) les éléments de commutation soient initialement dans le premier état et passent dans le deuxième état durant les premiers cycles partiels de la tension C.A. ; (ii) les éléments de commutation passent du deuxième état dans le troisième état de façon sensiblement coïncidante avec les transitions des premiers aux deuxièmes cycles partiels de la tension C.A. ; et (iii) les éléments de commutation soient initialement dans le troisième état et passent dans le deuxième état durant les deuxièmes cycles partiels de la tension C.A.

5. Convertisseur de puissance de commutation selon la revendication 4, dans lequel :
les signaux de commande comprennent des premier, deuxième, troisième et quatrième signaux de commande exploitables pour polariser les premier, deuxième, troisième et quatrième éléments de commutation, respectivement, sur l'état activé et désactivé, chacun des signaux de commande comportant une pluralité d'impulsions de tension, chaque impulsion de tension étant définie par : (I) un potentiel d'ACTIVATION qui polarise un élément de commutation respectif sur l'état activé, (ii) un potentiel de DESACTIVATION qui polarise l'élément de commutation particulier sur l'état désactivé, (iii) un front d'ACTIVATION situé au niveau d'une transition du potentiel de DESACTIVATION au potentiel d'ACTIVATION, et (iv) un front de DESACTIVATION situé au niveau d'une transition du potentiel d'ACTIVATION au potentiel de DESACTIVATION ;
les fronts de DESACTIVATION des impulsions de tension du quatrième signal de commande coïncident sensiblement avec les transitions des premiers aux deuxièmes cycles partiels de la tension C.A. ;
les fronts d'ACTIVATION des impulsions de tension des premier et troisième signaux de commande coïncident sensiblement avec (I) les transitions des deuxièmes aux premiers cycles partiels de la tension C.A. ; et (ii) les transitions des premiers aux deuxièmes cycles partiels de la tension C.A. ;
les fronts de DESACTIVATION des impulsions de tension du deuxième signal de commande coïncident sensiblement avec les transitions des deuxièmes aux premiers cycles partiels de la tension C.A. ;
les fronts d'ACTIVATION des impulsions de tension du deuxième signal de commande coïncident sensiblement avec un premier sous-ensemble des fronts de DESACTIVATION des impulsions de tension des premier et troisième signaux de commande ; et
les fronts d'ACTIVATION des impulsions de tension du quatrième signal de commande coïncident sensiblement avec un deuxième sous-ensemble des fronts de DESACTIVATION des impulsions de tension des premier et troisième signaux de commande.

6. Convertisseur de puissance de commutation selon la revendication 5, dans lequel le circuit de commande est exploitable afin de produire les signaux de commande de telle sorte que :
les éléments de commutation passent du deuxième état au premier état durant les premiers cycles partiels de la tension C.A. ;
les éléments de commutation passent du premier état au troisième état de façon sensiblement coïncidante avec les transitions des premiers aux deuxièmes cycles partiels de la tension C.A ;
les éléments de commutation passent du troisième état au deuxième état durant les deuxièmes cycles partiels de la tension C.A. ; et
les éléments de commutation restent dans le deuxième état durant les transitions des deuxièmes aux premiers cycles partiels de la tension C.A..

7. Convertisseur de puissance de commutation selon la revendication 6, dans lequel :
les signaux de commande comprennent des premier, deuxième, troisième et quatrième signaux de commande exploitables pour polariser les premier, deuxième, troisième et quatrième éléments de commutation, respectivement, sur l'état activé et désactivé, chacun des signaux de commande comportant une pluralité d'impulsions de tension, chaque impulsion de tension étant définie par : (I) un potentiel d'ACTIVATION qui polarise un élément de commutation respectif sur l'état activé, (ii) un potentiel de DESACTIVATION qui polarise l'élément de commutation particulier sur l'état désactivé, (iii) un front d'ACTIVATION situé au niveau d'une transition du potentiel de DESACTIVATION au potentiel d'ACTIVATION, et (iv) un front de DESACTIVATION situé au niveau d'une transition du potentiel d'ACTIVATION au potentiel de DESACTIVATION ;
les fronts de DESACTIVATION des impulsions de tension du quatrième signal de commande coïncident sensiblement avec les transitions des premiers aux deuxièmes cycles partiels de la tension C.A. ;
les fronts d'ACTIVATION des impulsions du deuxième signal de commande coïncident sensiblement avec les transitions des premiers aux deuxièmes cycles partiels de la tension C.A. ;
les fronts de DESACTIVATION des impulsions de tension du deuxième signal de commande coïncident sensiblement avec les fronts d'ACTIVATION des impulsions de tension des premier et troisième signaux de commande ; et
les fronts d'ACTIVATION des impulsions de tension du quatrième signal de commande coïncident sensiblement avec les fronts de DESACTIVATION des impulsions de tension des premier et troisième signaux de commande.

8. Convertisseur de puissance de commutation selon la revendication 7, dans lequel le circuit de commande est exploitable afin de faire varier des largeurs respectives entre les fronts de DESACTIVATION et d'ACTIVATION des impulsions de tension respectives afin de commander les première et deuxième tensions régulées.

9. Convertisseur de puissance de commutation selon la revendication 1, dans lequel les premier, deuxième, troisième et quatrième éléments de commutation sont des transistors à grille MOS.

10. Convertisseur de puissance de commutation selon la revendication 1, dans lequel les premier et troisième éléments de commutation sont des transistors C.A. à grille MOS, les deuxième et quatrième transistors sont des transistors à grille MOS, et l'enroulement de transformateur secondaire comporte une prise centrale couplée au noeud commun.
